# EUROPÄISCHE PATENTANMELDUNG

(11) **EP 4 438 817 A1**
(43) Veröffentlichungstag der Anmeldung: **02.10.2024**
(21) Anmeldenummer: 23170243.2
(22) Anmeldetag: 27.04.2023
(51) Int. Cl.: E02F 9/08

(54) **ARBEITSMASCHINE**

(30) Priorität: 30.03.2023 DE 102023108174
(71) Anmelder: Liebherr-Werk Bischofshofen GmbH, 5500 Bischofshofen (AT)
(72) Erfinder: DENGG, Reinhard, 5580 Tamsweg (AT); HEUGENHAUSER, Gerald, 5622 Goldegg (AT); KNAPP, Hans, 5500 Bischofshofen (AT); OEBSTER, Matthias, 5542 Flachau (AT)
(74) Vertreter: Herrmann, Uwe

(57) **Zusammenfassung**

Die vorliegende Erfindung betrifft eine Arbeitsmaschine, die eine Kabine für den Führer der Arbeitsmaschine, einen hinter der Kabine angeordneten Maschinenraum mit einem Antrieb für die der Arbeitsmaschine, und mindestens einen hinter der Kabine angeordneten Tank zur Aufnahme eines Kraftstoffs, insbesondere von Wasserstoff umfasst. Die Arbeitsmaschine ist dadurch gekennzeichnet, dass sie eine Verschiebevorrichtung aufweist, auf welcher der mindestens eine Tank innerhalb eines am Arbeitsmaschinengrundkörper befestigten Montagerahmens angeordnet ist, wobei die Verschiebevorrichtung dazu ausgelegt ist, eine seitliche Verschiebung des mindestens einen Tank zuzulassen, falls eine seitlich auf den mindestens einen Tank und/oder die Verschiebevorrichtung einwirkende Kraft einen voreingestellten Schwellenwert übersteigt.

## Beschreibung

Die vorliegende Erfindung betrifft eine Arbeitsmaschine, insbesondere einen Radlader, mit einer Kabine für den Führer der Arbeitsmaschine sowie mit einem hinter der Kabine angeordneten Maschinenraum.

Aus dem Stand der Technik ist es bekannt, Radlader mit einer Kabine für den Führer der Arbeitsmaschine und mit einem Maschinenraum auszuführen, wobei sich in dem Maschinenraum ein Dieselmotor befindet, der zum Vortrieb der Arbeitsmaschine dient.

Im Zuge der Dekarbonisierung stellt sich auch im Bereich von Arbeitsmaschinen die Frage nach alternativen Energieträgern, wie beispielsweise Wasserstoff. Dessen Einsatz hat sich weder bei Personen- noch bei Nutzfahrzeugen durchgesetzt.

Der vorliegenden Erfindung liegt die Aufgabe zugrunde, eine Arbeitsmaschine der eingangs genannten Art dahingehend weiterzubilden, dass diese für den Einsatz alternativer Energieträger, insbesondere von Wasserstoff, besonders geeignet ist und auch die damit einhergehenden erhöhten Sicherheitsanforderungen erfüllt.

Diese Aufgabe wird durch eine Arbeitsmaschine mit den Merkmalen des Anspruchs 1 gelöst.

Danach ist eine Arbeitsmaschine vorgesehen, die eine Kabine für den Führer der Arbeitsmaschine, einen hinter der Kabine angeordneten Maschinenraum mit einem Antrieb für die der Arbeitsmaschine, und mindestens einen hinter der Kabine angeordneten Tank zur Aufnahme eines Kraftstoffs, insbesondere von Wasserstoff umfasst. Die Arbeitsmaschine ist dadurch gekennzeichnet, dass sie eine Verschiebevorrichtung aufweist, auf welcher der mindestens eine Tank innerhalb eines am Arbeitsmaschinengrundkörper befestigten Montagerahmens angeordnet ist, wobei die Verschiebevorrichtung dazu ausgelegt ist, eine seitliche Verschiebung des mindestens einen Tanks zuzulassen, falls eine seitlich auf den mindestens einen Tank und/oder die Verschiebevorrichtung einwirkende Kraft einen Schwellenwert übersteigt.

Kommt es nämlich bspw. zu einem Umkippen der Arbeitsmaschine zur Seite hin, besteht die Gefahr, dass der mindestens eine Tank strukturelle Schäden erleidet und es zu einem Ausströmen des darin aufgenommenen Kraftstoffs, bspw. Wasserstoffs, kommt.

Um eine strukturelle Beschädigung des mindestens einen Tanks zu verhindern ist nach der Erfindung vorgesehen, dass bei einem Kippen der Arbeitsmaschine zur Seite hin der Tank eine Ausweichbewegung mithilfe der Verschiebevorrichtung ausführen kann, die ihn vor übermäßigen Krafteinwirkungen schützt und zur Beibehaltung der strukturellen Integrität des Tanks führt.

So verfügt die erfindungsgemäße Arbeitsmaschine über eine Verschiebevorrichtung, die bei einer seitlichen Krafteinwirkung auf den mindestens einen Tank eine Verschiebung des Tanks in die Richtung der Krafteinwirkung zulässt, sodass bspw. bei einem Kippen der Arbeitsmaschine zur Seite hin der mindestens eine Tank entsprechend verschoben wird und die Krafteinwirkung auf andere Bauteile der Arbeitsmaschine, insbesondere die Fahrerkabine oder dergleichen primär einwirkt. Dies führt dazu, dass die Wahrscheinlichkeit einer strukturellen Beschädigung des mindestens einen Tanks verringert wird, sodass insgesamt die Gefahr einer Leckage des Kraftstoffs, die insbesondere bei Wasserstoff erheblich ist, verringert wird.

Nach einer Fortbildung der Erfindung kann ferner vorgesehen sein, dass die Verschiebevorrichtung dazu ausgelegt ist, eine Verschiebung des mindestens einen Tanks in diejenige seitliche Richtung zuzulassen, in welche die seitlich einwirkende Kraft die Verschiebevorrichtung drängt. Kippt bspw. die Arbeitsmaschine zur Seite hin um, und kommt der mindestens eine Tank als erstes mit dem Boden in Kontakt, führt dies nicht etwa dazu, dass die gesamte Kraft auf den mindestens einen Tank einwirkt, sondern zunächst dazu, dass die Verschiebeeinrichtung eine Verschiebung des mindestens einen Tanks bei Übersteigen eines Kraftschwellenwerts zulässt, sodass die beim Kippen auftretende Kraft durch andere Bauteile der Arbeitsmaschine, beispielsweise die Fahrerkabine oder den Maschinenraum, abgebaut werden kann und es nicht zu einer strukturellen Schädigung des mindestens einen Tanks kommt. Selbst wenn die Fahrerkabine infolge der normativen Anforderungen durch das Einwirken einer seitlichen Kraft deutliche Verformung in Kraftrichtung zum Zwecke der Energieaufnahme zulässt, gewährleistet die Verschiebeeinrichtung, dass der zumindest eine Tank durch seine Ausweichbewegung der Verformung der Fahrerkabine folgen kann.

Ferner kann nach der vorliegenden Erfindung vorgesehen sein, dass die Verschiebevorrichtung innerhalb des Montagerahmens angeordnet ist, welcher den mindestens einen Tank zu seinem Schutz zumindest teilweise umgibt und die Verschiebevorrichtung über eine Haltekonstruktion verfügt, sodass sich der mindestens eine Tank nicht von der Verschiebevorrichtung lösen kann und nur die von der Verschiebevorrichtung vorgegebene seitliche Bewegung ausführen kann.

Der Montagerahmen ist mit dem Maschinengrundkörper verbunden und dient auch dazu, sicherzustellen, dass der mindestens eine Tank sich nicht unkontrolliert von der Arbeitsmaschine lösen kann. Dadurch wird verhindert, dass bei einem Kippen oder Überrollen der Arbeitsmaschine ein Tank zwischen Boden und Arbeitsmaschine geklemmt wird, sodass es zu einem unkontrollierten Austreten von Kraftstoff aus dem mindestens einen Tank kommt.

Nach einer optionalen Fortbildung der vorliegenden Erfindung kann vorgesehen sein, dass die Verschiebevorrichtung dazu ausgelegt ist, eine seitliche Verschiebung des mindestens einen Tanks so weit zuzulassen, dass dieser in Seitenrichtung gesehen hinter die Fahrerkabine zurücktritt.

Dies ist von Vorteil um eine Krafteinwirkung bei einem Kippen der Arbeitsmaschine mithilfe der Fahrerkabine abzufangen, sodass möglichst wenig Kraft auf die mindestens einen Tank einwirkt.

So kann vorgesehen sein, dass die Abmessung des mindestens einen Tanks in Querrichtung gesehen über die Abmessung der Fahrerkabine in Querrichtung gesehen hinausragt, sodass es für die Erfindung von Vorteil ist, wenn der mindestens eine Tank mithilfe der Verschiebevorrichtung soweit seitlich verschoben werden kann, dass dieser zu einer Seite hin hinter der Fahrerkabine zurücktreten kann, damit die Fahrerkabine eine von der Seite einwirkende Kraft aufnehmen und abbauen kann.

Weiters kann nach der Erfindung vorgesehen sein, dass die Verschiebevorrichtung über ein Schienensystem verfügt, über das der mindestens eine Tank mit dem Montagerahmen an einem Arbeitsmaschinengrundkörper angebunden ist, wobei vorzugsweise das Schienensystem seitlich, insbesondere quer zur Fahrtrichtung der Arbeitsmaschine orientiert ist und eine entsprechende Bewegung quer zum Arbeitsmaschinengrundkörper zulässt. Das Schienensystem kann dabei so ausgestaltet sein, dass nur eine quer zum Arbeitsmaschinengrundkörper verlaufende Bewegung möglich ist.

Alternativ und nicht einschränkend kann die Funktion der Verschiebevorrichtung auch durch die Haltekonstruktion des Tanks selbst abgedeckt werden, indem die Haltekonstruktion bspw. in Form von Spannschellen ausgeführt ist, welche den Tank im Normalbetrieb in Position halten und diesen bei erhöhter seitlicher Krafteinwirkung jedoch in Kraftrichtung ausweichen lassen, was sich besonders anbietet, wenn der Tank als zylinderförmiger Behälter ausgebildet ist.

Nach einer optionalen Modifikation der vorliegenden Erfindung kann vorgesehen sein, dass die Verschiebevorrichtung dazu ausgelegt ist nur eine Bewegung in seitlicher Richtung zuzulassen und insbesondere eine dazu senkrecht stehende Bewegung, vorzugsweise eine Bewegung in Vorwärts- oder Rückwärtsrichtung oder in Höhenrichtung der Arbeitsmaschine unterbindet.

Weiter kann nach der vorliegenden Erfindung vorgesehen sein, dass die Verschiebevorrichtung über eine Arretierung verfügt, die eine seitliche Bewegung des mindestens einen Tanks erst dann zulässt, wenn die seitlich auf die mindestens einen Tank und/oder die Verschiebevorrichtung einwirkende Kraft den voreingestellten Schwellenwert übersteigt.

Der die Verschiebeeinrichtung umgebende Montagerahmen ist dahingehend ausgebildet, das seitliche Ausweichen des mindestens einen Behälters zu ermöglichen und trotz einer etwaigen Verformung infolge der Krafteinwirkung mit dem Arbeitsmaschinengrundkörper verbunden zu bleiben, um dadurch die Funktion einer Ausreißsicherung für den Tank bzw. die Tankbaugruppe zu gewährleisten.

Nach einer vorteilhaften Fortbildung der vorliegenden Erfindung kann vorgesehen sein, dass der mindestens eine Tank mit einem Magnetventil versehen ist, um den mindestens einen Tank zu schließen oder zu öffnen und bei Bedarf eine Fluidverbindung zum Maschinenraum über eine Kraftstoffleitung herzustellen bzw. zu unterbrechen.

So kann vorgesehen sein, dass der in dem mindestens einen Tank aufgenommene Kraftstoff zum Antreiben der Arbeitsmaschine oder eines seiner Bestandteile genutzt wird. Der Antrieb der Arbeitsmaschine befindet sich dabei typischerweise in dem Maschinenraum der Arbeitsmaschine, sodass es einer Kraftstoffleitung zum Strömen des in dem mindestens einen Tank angeordneten Kraftstoffs hin zum Maschinenraum bedarf. Zum Erstellen und/oder Schließen einer Fluidverbindung zwischen Maschinenraum und dem mindestens einen Tank kann dabei ein

Magnetventil vorgesehen sein, welches zwischen einer offenen und einer geschlossenen Position schaltbar ist.

Dabei kann es von Vorteil sein, wenn das Magnetventil des mindestens einen Tanks im stromlosen Zustand in die geschlossene Position übergeht oder dort verbleibt.

So kann nach der Erfindung vorgesehen sein, dass eine elektrische Versorgungsleitung zum Versorgen des Magnetventils des mindestens einen Tanks vorgesehen ist, die durch eine seitliche Verrückung der Verschiebevorrichtung physisch durchtrennt wird.

Kommt es also tatsächlich zu einer so großen seitlichen Krafteinwirkung auf den mindestens einen Tank, dass die Verschiebevorrichtung eine seitliche Verschiebung zulässt, da der Schwellenwert der seitlichen Krafteinwirkung übertroffen worden ist, wird die Versorgungsleitung zum Versorgen des Magnetventils (oder der mehreren Magnetventile bei Vorhandensein von mehreren Tanks) gekappt, so dass das Magnetventil in den stromlosen Zustand überführt wird, in dem es den zugehörigen Tank verschließt.

Dies hat zur Folge, dass die Möglichkeit eines Ausströmens von Kraftstoff aus dem mindestens einen Tank über eine durch die Verformung beschädigte Kraftstoffleitung unterbunden wird.

Ferner kann nach der vorliegenden Erfindung vorgesehen sein, dass die Arbeitsmaschine darüber hinaus eine Steuereinheit umfasst, die dazu ausgelegt ist, mithilfe von mindestens einem Sensor eine Längs -oder Querneigung der Arbeitsmaschine zu bestimmen und bei Überschreiten eines voreingestellten Grenzwerts der Längs- und/oder Querneigung das Magnetventil des mindestens einen Tanks zu schließen, vorzugsweise durch Stromlosschalten des Ventils.

Die Steuereinheit kann also bereits vor einem Eintreten eines tatsächlich erfolgten Kippens der Arbeitsmaschine dafür sorgen, dass der mindestens eine Tank mithilfe seines zugehörigen Magnetventils verschlossen wird, obwohl noch gar keine Verschiebung des mindestens einen Tanks mithilfe der Verschiebevorrichtung erfolgt ist.

Zur Bestimmung, ob der mindestens eine Tank mithilfe seines Magnetventils geschlossen werden soll, greift die Steuereinheit auf mindestens einen Sensor zurück, der bspw. Auskunft über die Lage der Arbeitsmaschine in Bezug auf den Rollwinkel oder den Neigungswinkel gibt. Auf Grundlage der so erhaltenen Sensorwerte bestimmt die Steuereinheit dann die Wahrscheinlichkeit eines Kippens der Arbeitsmaschine, sodass bei Überschreiten eines vorgegebenen Schwellenwerts das Verschließen des mindestens einen Tanks durchgeführt wird.

Eine weitere optionale Ausbildung der Erfindung kann eine Steuereinheit mit mindestens einen Sensor umfassen, der das Verschieben des mindestens einen Tanks erkennt und in diesem Fall das Magnetventil des mindestens einen Tanks schließen kann, vorzugsweise durch Stromlosschalten des Ventils.

Die Steuereinheit kann in diesem Fall, etwa bei seitlichem Anfahren an den Radlader dafür sorgen, dass der mindestens eine Tank mithilfe seines zugehörigen Magnetventils verschlossen wird.

Nach einer weiteren optionalen Modifikation der vorliegenden Erfindung kann vorgesehen sein, dass der mindestens eine Tank zwischen der Kabine und dem Heck der Arbeitsmaschine in einem Wasserstoff-Kraftstoffsystem angeordnet sind, insbesondere wobei der Tank unmittelbar hinter der Kabine angeordnet ist und/oder der Tank nicht oberhalb des Maschinenraums angeordnet ist.

Darüber hinaus kann nach der vorliegenden Erfindung vorgesehen sein, dass die Abmessungen des mindestens einen Tanks in Querrichtung der Arbeitsmaschine über die Abmessung der Fahrerkabine in Querrichtung hinausragen und/oder wobei der mindestens eine Tank hinter der Kabine in einer Vertiefung angeordnet ist.

Nach der Erfindung kann ebenfalls vorgesehen sein, dass der Antrieb über eine Brennstoffzelle zur Erzeugung von elektrischer Energie mittels Wasserstoff und/oder über einen Wasserstoffhubkolbenmotor verfügt, wobei der Kraftstoff hierfür in dem mindestens einem Tank vorgehalten wird.

Nach einer optionalen Fortbildung der Erfindung kann vorgesehen sein, dass eine Vielzahl von Tanks zur Aufnahme eines Kraftstoffs, insbesondere Wasserstoff, vorgesehen ist, wobei jeder der mehreren Tanks über ein jeweiliges Magnetventil zum Verschließen bzw. Öffnen des entsprechenden Tanks verfügt.

Weitere Einzelheiten, Merkmale und Vorteile der Erfindung werden anhand der nachfolgenden Zeichnungen ersichtlich, in denen eine Ausführungsform der vorliegenden Erfindung dargestellt ist.

Es zeigen:
Figur 1: eine schematische Draufsicht auf den Radlader,
Figur 2: eine schematische Seitenansicht eines Radladers von links,
Figur 3: eine schematische Seitenansicht eines Radladers von links mit heckseitigem Aufstieg, und
Figur 4: eine schematische Draufsicht auf den Lader, wobei eine seitliche Krafteinwirkung das Verschieben des mindestens einen Tanks bewirkt.

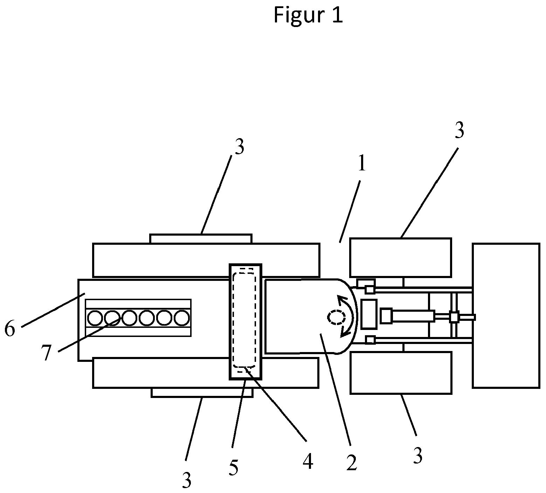

Figur 1 zeigt eine Draufsicht auf den Radlader 1 gemäß der Erfindung. Der Radlader 1 weist einen Vorderwagen und einen Hinterwagen auf, die durch ein Knickgelenk miteinander verbunden sind. Der Doppelpfeil um das gestrichelt dargestellte Knickgelenk verdeutlicht die Bewegbarkeit von Vorder- und Hinterwagen relativ zueinander.

Mit dem Bezugszeichen 2 ist die Kabine für den Führer des Radladers gekennzeichnet. Die Kabine ist an dem Hinterwagen angeordnet. Unmittelbar hinter der Kabine 2 befindet sich ein quer zur Fahrtrichtung angeordneter Tank 4, der von einer ebenfalls quer zur Fahrtrichtung angeordneten schützenden Struktur und von einem Montagerahmen 5 vorzugsweise allseitig umgeben ist.

In dem dargestellten Ausführungsbeispiel erstreckt der Tank 4 und der Montagerahmen 5 beidseitig über die Kabine 2 hinaus.

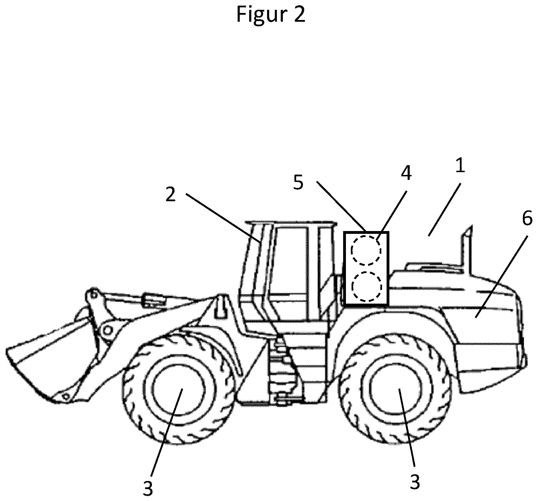

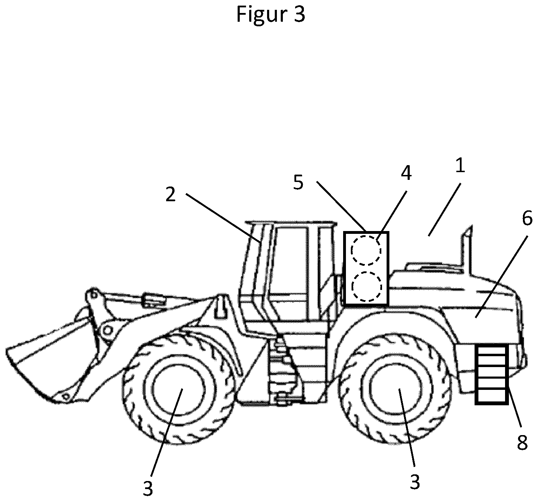

Wie dies aus den Seitenansichten der Figuren 2 und 3 hervorgeht, erstreckt sich das Tanksystem im Wesentlichen bis zum Kabinendach. Es kann einen, zwei oder mehr als zwei übereinander und/oder nebeneinander angeordnete Tanks aufweisen. Dabei wird der in dem Tank 4 gespeicherte Kraftstoff hin zum Maschinenraum 6 geleitet, wo er dann in einer Umwandlungseinheit 7 (bspw. WasserstoffHubkolbenmotor oder Brennstoffzelle) umgewandelt wird.

Im Hinterwagen des Radladers befindet sich der Maschinenraum 6, der u.a. die Antriebstechnik des Radladers zum Antrieb der Räder 3 des Radladers 1 aufweist. Bei dem Antrieb kann es sich beispielsweise um einen Wasserstoffhubkolbenmotor handeln oder auch um eine Brennstoffzelle, die einen Elektromotor mit elektrischer Energie versorgt.

Mit dem Bezugszeichen 8 ist der Wartungs- und Servicezugang zu dem Maschinenraum 6 gekennzeichnet, der wie aus Figur 3 ersichtlich vorzugsweise als Leiter bzw. Stiege ausgebildet ist.

Figur 2 zeigt den Radlader gemäß Figur 1 in einer Seitenansicht von links und Figur 3 zeigt den Radlader gemäß Figur 1 in einer Seitenansicht von links mit optionalem, heckseitigen Zugang.

Aus beiden Figuren ist ersichtlich, dass sich der Tank bzw. die Tankanordnung unmittelbar hinter der Kabine 2 befindet. Zwischen der Kabine 2 und dem Maschinenraum 6 befindet sich eine Vertiefung, in der die Tankanordnung angeordnet ist.

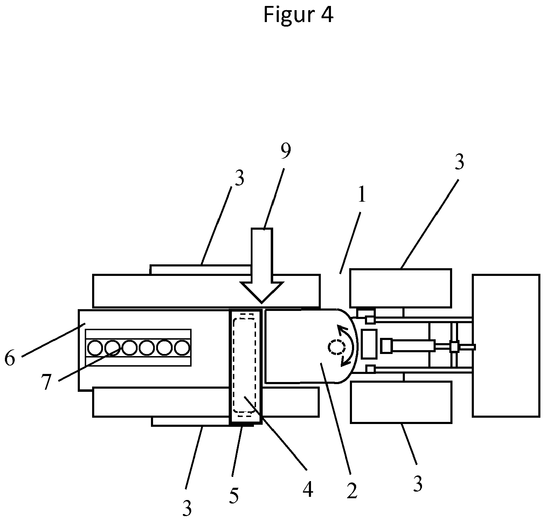

Figur 4 zeigt erneut eine Draufsicht auf den Radlader 1, bei der mit dem Bezugszeichen 9 nun eine seitliche Krafteinwirkung dargestellt ist, die zu einem Verschieben des mindestens einen Tanks 4 mithilfe der Verschiebevorrichtung geführt hat. Im Vergleich zu Figur 1 erkennt man, dass die Position des mindestens einen Tanks 4 in Richtung der Krafteinwirkung 9 verschoben ist, sodass die Krafteinwirkung 9 nun nicht mehr primär an der Struktur des mindestens einen Tanks 4 (oder der den Tank 4 umgebenden Haltekonstruktion oder am umgebenden Montagerahmen) ansetzt, sondern darüber hinaus auch durch die Fahrerkabine 2 oder den Maschinenraum 6 abgebaut werden kann. Dies bewirkt, dass die Krafteinwirkung 9 nicht mehr primär auf die mindestens einen Tank 4 bzw. den Montagerahmen wirken kann, sondern durch das Verschieben auch auf andere Strukturbauteile der Arbeitsmaschine einwirkt.

Im Ergebnis kann eine strukturelle Beschädigung infolge des Lastfalles der seitlichen Krafteinwirkung des mindestens einen Tanks 4 damit entschärft werden, sodass die Sicherheit der Arbeitsmaschine und des Maschinenführers gewährleistet werden kann.

## Patentansprüche

1. Arbeitsmaschine, insbesondere Radlader, umfassend:
eine Kabine für den Führer der Arbeitsmaschine,
einen hinter der Kabine angeordneten Maschinenraum mit einem Antrieb für die der Arbeitsmaschine, und
mindestens einen hinter der Kabine angeordneten Tank zur Aufnahme eines Kraftstoffs, insbesondere von Wasserstoff,
**gekennzeichnet durch**
eine Verschiebevorrichtung auf welcher der mindestens eine Tank innerhalb eines am Arbeitsmaschinengrundkörper befestigten Montagerahmens angeordnet ist, wobei
die Verschiebevorrichtung dazu ausgelegt ist, eine seitliche Verschiebung des mindestens einen Tank zuzulassen, falls eine seitlich auf den mindestens einen Tank und/oder die Verschiebevorrichtung einwirkende Kraft einen Schwellenwert übersteigt.

2. Arbeitsmaschine nach dem vorhergehenden Anspruch 1, wobei die Verschiebevorrichtung dazu ausgelegt ist, eine Verschiebung des mindestens einen Tanks in diejenige seitliche Richtung zuzulassen, in welche die seitlich einwirkende Kraft die Verschiebevorrichtung drängt.

3. Arbeitsmaschine nach einem der vorhergehenden Ansprüche, wobei die Verschiebevorrichtung über eine Haltekonstruktion, vorzugsweise in Form von Spannschellen, verfügt, welche den mindestens einen Tank umgibt, insbesondere derart, dass der mindestens eine Tank sich nicht von der Verschiebevorrichtung lösen kann und nur die von der Verschiebevorrichtung vorgegebene Bewegung ausführen kann.

4. Arbeitsmaschine nach einem der vorhergehenden Ansprüche, wobei die Verschiebevorrichtung dazu ausgelegt ist, eine seitliche Verschiebung des mindestens einen Tanks so weit zuzulassen, dass dieser in Seitenrichtung gesehen hinter die Fahrerkabine zurücktritt.

5. Arbeitsmaschine nach einem der vorhergehenden Ansprüche, wobei die Verschiebevorrichtung über ein Schienensystem verfügt, über das der mindestens eine Tank am Montagerahmen angebunden ist, wobei die das Schienensystem umfassende Verschiebevorrichtung seitlich, insbesondere quer zur Fahrtrichtung der Arbeitsmaschine orientiert ist und eine entsprechende Bewegung quer zum Arbeitsmaschinengrundkörper zulässt.

6. Arbeitsmaschine nach einem der vorhergehenden Ansprüche, wobei die Verschiebevorrichtung eine in Form von Spannschellen ausgeführte Haltekonstruktion umfasst, über welche der mindestens eine Tank an dem Montagerahmen angebunden ist, wobei die die Spannschellen aufweisende Verschiebevorrichtungseitlich, insbesondere quer zur Fahrtrichtung der Arbeitsmaschine orientiert ist und eine entsprechende Bewegung quer zum Arbeitsmaschinengrundkörper zulässt.

7. Arbeitsmaschine nach einem der vorhergehenden Ansprüche, wobei die Verschiebevorrichtung dazu ausgelegt ist nur eine Bewegung in seitlicher Richtung zuzulassen und insbesondere eine dazu senkrecht stehende Bewegung, vorzugsweise eine Bewegung in Vorwärts- oder Rückwärtsrichtung oder in Höhenrichtung der Arbeitsmaschine unterbindet.

8. Arbeitsmaschine nach einem der vorhergehenden Ansprüche, wobei die Verschiebevorrichtung von dem Montagerahmen umgeben ist, der dazu ausgebildet ist, ein seitliches Ausweichen des mindestens einen Tanks zu ermöglichen und der trotz Verformung infolge einer seitlichen Krafteinwirkung mit dem Arbeitsmaschinengrundkörper verbunden bleibt, und die Funktion einer Ausreißsicherung für den mindestens einen mit der Verschiebevorrichtung verbundenen Tank übernimmt.

9. Arbeitsmaschine nach einem der vorhergehenden Ansprüche, wobei die Verschiebevorrichtung über eine Arretierung verfügt, die eine seitliche Bewegung des mindestens einen Tanks erst dann zulässt, wenn die seitlich auf die mindestens einen Tank und/oder die Verschiebevorrichtung einwirkende Kraft den Schwellenwert übersteigt.

10. Arbeitsmaschine nach einem der vorhergehenden Ansprüche, wobei der mindestens eine Tank mit einem Magnetventil versehen ist, um den mindestens einen Tank zu schließen oder zu öffnen und bei Bedarf eine Fluidverbindung zum Maschinenraum über eine Kraftstoffleitung herzustellen bzw. zu unterbrechen.

11. Arbeitsmaschine nach dem vorhergehenden Anspruch 10, wobei das Magnetventil des mindestens einen Tanks im stromlosen Zustand in die geschlossene Position übergeht oder dort verbleibt.

12. Arbeitsmaschine nach dem vorhergehenden Anspruch 10 oder 11, wobei eine elektrische Versorgungsleitung zum Versorgen des Magnetventils des mindestens einen Tanks vorgesehen ist, die durch eine seitliche Verrückung der Verschiebevorrichtung physisch durchtrennt wird.

13. Arbeitsmaschine nach einem der vorhergehenden Ansprüche, wobei der mindestens eine Tank zwischen der Kabine und dem Heck der Arbeitsmaschine in einem Wasserstoff-Kraftstoffsystem angeordnet sind, insbesondere wobei der Tank unmittelbar hinter der Kabine angeordnet ist und/oder der Tank nicht oberhalb des Maschinenraums angeordnet ist.

14. Arbeitsmaschine nach einem der vorhergehenden Ansprüche, wobei die Abmessungen des mindestens einen Tanks in Querrichtung der Arbeitsmaschine über die Abmessung der Fahrerkabine in Querrichtung hinausragen und/oder wobei der mindestens eine Tank hinter der Kabine in einer Vertiefung angeordnet ist.

15. Arbeitsmaschine nach einem der vorhergehenden Ansprüche, wobei der Antrieb über eine Brennstoffzelle zur Erzeugung von elektrischer Energie mittels Wasserstoff und/oder über einen Wasserstoffhubkolbenmotor verfügt.

16. Arbeitsmaschine nach einem der vorhergehenden Ansprüche, wobei eine Vielzahl von Tanks zur Aufnahme eines Kraftstoffs, insbesondere Wasserstoff, vorgesehen sind, von denen ein jeder über ein Magnetventil zum Verschließen bzw. Öffnen eines jeweiligen Tanks verfügt.

17. Arbeitsmaschine nach einem der vorhergehenden Ansprüche, umfassend eine Steuereinheit, die dazu ausgelegt ist, mithilfe von mindestens einem Sensor, der das Verschieben des mindestens einen Tanks erkennt, das Magnetventil des mindestens einen Tanks zu schließen, vorzugsweise durch Stromlosschalten des Ventils.

18. Arbeitsmaschine umfassend eine Steuereinheit, die dazu ausgelegt ist, mithilfe von mindestens einem Sensor eine Längs -oder Querneigung der Arbeitsmaschine zu bestimmen und bei Überschreiten eines voreingestellten Grenzwerts der Längs- und/oder Querneigung das Magnetventil des mindestens einen Tanks zu schließen, vorzugsweise durch Stromlosschalten des Ventils.
